Europäisches Patentamt

European Patent Office

Office européen des brevets

(19)

(11) Publication number : **0 471 420 A2**

(12) **EUROPEAN PATENT APPLICATION**

(21) Application number : **91202684.6**

(22) Date of filing : **10.11.87**

(51) Int. Cl.$^5$ : **B01D 29/00**, B01L 3/02,
B01D 35/00

This application was filed on 17 - 10 - 1991 as a divisional application to the application mentioned under INID code 60.

(30) Priority : **12.11.86 US 929352**

(43) Date of publication of application :
**19.02.92 Bulletin 92/08**

(60) Publication number of the earlier application in accordance with Art. 76 EPC : **0 267 783**

(84) Designated Contracting States :
**DE FR IT**

(71) Applicant : **PALL CORPORATION**
**30 Sea Cliff Avenue**
**Glen Cove New York 11542 (US)**

(72) Inventor : **Pascale, Frank R.**
**12 Francis Court**
**Glen Cove, New York 11542 (US)**
Inventor : **Matkovich, Vlado I.**
**11 Old Estate Road**
**Glen Cove, New York 11542 (US)**

(74) Representative : **Knott, Stephen Gilbert et al**
**MATHISEN, MACARA & CO. The Coach House**
**6-8 Swakeleys Road**
**Ickenham Uxbridge Middlesex UB10 8BZ (GB)**

(54) **Filter device.**

(57) A device (10) for reducing the amount of particulate contaminant in a liquid is provided which includes a hollow elongate member (12) having first and second openings (14,16) and filter means (18), preferably depth filter means, positioned in the elongate member, the filter means in combination with the elongate member defining a reservoir (24) between the filter means and the first opening. The device is intended to be used with means associated with the first opening for generating a pressure differential between the interior of the elongate member and the exterior thereof whereby a liquid containing particulate contaminant may be introduced into the reservoir (24) in the elongate member through the second opening, particulate contaminant being trapped within the filter means and a liquid with a reduced particulate contaminant may be removed from the elongate member through the second opening.

EP 0 471 420 A2

The present invention relates to devices for filtering particulate-containing fluids. More particularly, the present invention relates to disposable devices for reducing the amount of particulate contaminant in a liquid sample.

Liquids subjected to analysis in some instances contain sediment or particulate contaminants which interfere with the qualitative and/or quantitive tests performed on the liquid sample. In some situations, such as the analysis of biological fluids, particularly body fluids such as urine, it may not be necessary to totally eliminate all particulate contaminants, but merely to reduce the amount of such contaminants to below the level or amount which interferes with the particular test being performed. Current practice accomplishes such a reduction in concentration of particulate contaminants with a variety of devices and associated techniques. Most of the devices and techniques involve drawing or passing the liquid sample (specimen) through a coarse filter which permits passage of purified liquid (filtrate) through the filter, the filtrate being drawn off from the downstream side of the device, while the particulate contaminant is retained on the upstream side of the filter. In some of these devices, the filter is discarded after transfer of the liquid component of the sample. With other devices used for such purposes the entire device is disposed of after use.

Some of these devices have shortcomings associated with the manner in which the device is manipulated or liquids are transferred. For example, introducing a sample at an upstream side of the device and removing filtrate from a downstream side of the device permits several potential sites of leakage. Additionally, with some of the devices, additional pieces of apparatus are required to successfully complete the transfer of filtrate. Many of the devices currently employed are also difficult to manipulate by all but those with above average dexterity. Furthermore, many of the techniques and devices currently employed require multiple steps which increase both the amount of time spent in transferring material and the potential for losses and contamination occurring during transfer and disposal of material.

The present invention is directed to devices suitable for reducing the amount of particulate contaminant in a liquid. These devices overcome many of the shortcomings of the prior art in that they provide facile operation, reduce the potential for leakage and contamination and, in most instances, are intended to be disposable.

According to the invention there is provided a device for reducing the amount of particulate contaminant in a liquid of the kind comprising a hollow elongate member having an opening at one end thereof; depth filter means fixedly positioned in said elongate member at the opening, said depth filter means in combination with said elongate member defining a reservoir between said depth filter means and an end of said elongate member opposite said one end; and means at said end of said elongate member opposite said one end for generating a pressure differential between the interior of said elongate member and the exterior thereof whereby a liquid previously containing particulate contaminant may be introduced into the reservoir in said elongate member exclusively through said opening and said depth filter means, particulate contaminant being trapped within said depth filter means and a liquid with a reduced particulate contaminant may be removed from said elongate member exclusively through said depth filter means and said opening, characterized in that said elongate member is formed in one-piece, said depth filter means being so positioned at said opening that no antechamber is provided between said opening and said depth filter means.

A device embodying the invention will now be described, by way of example, with reference to the accompanying diagrammatic drawing which illustrates a device for reducing the amount of particulate contaminant in a liquid. The device for reducing the amount of particulate contaminant in a liquid sample, generally designated 10, includes a hollow member 12, typically having an elongated shape and having a lower open end 14 and an upper end 16. The hollow member 12 preferably has a circular cross section and preferably is formed from an inert, transparent material, such as glass or plastic. Typically, materials such as polycarbonates, polystyrene, or polyolefins such as polyethylene and polypropylene may be used. However, other cross-sectional configurations and other materials may also be used. The term "inert" as used herein, refers to a lack of chemical reactivity toward solvents which may be employed and substances present in the specimen, particularly in biological samples, such as bodily fluids, and at various pH conditions, particularly those values encountered in biological fluids such as body fluids.

Particularly preferred as the hollow or tubular member 12 is an elongated tube of circular cross section, having generally parallel walls and tapering toward the lower open end 14. Particularly preferred as the hollow member is a glass or plastic tube similar in shape to a laboratory pipette or eyedropper.

Located in tubular member 12 at the opening 14 is a porous element 18 which functions as a depth filter. Depth filters, useful in the present invention, typically comprising a body of fibrous or filamentary material, function by providing a body of filtering material which includes tortuous paths for the fluid being filtered and traps particulate material at various points along those tortuous paths, that is, within the depths of the filter medium, giving rise to the conventional descriptive name, depth filter, i.e., such filters provide dirt capacity by retaining dirt within the body of the filter medium. Thus, a depth filter differs from a surface filter in that particulate matter is trapped largely or exclusively by mechanical interactions, i.e., particles being held within pores having dimensions smaller than that of the particle. Depending on the materials from which the depth filter is formed and the substances passing through the filter, molecular interactions, such as Van der Waals forces, etc., may also contribute to particle retention. When a device is used such as the embodiment in accordance with the present invention, illustrated in the Figure, in which the flow of liquid is bi-directional, that is, filtrate flows in a direction opposite to that of the incoming liquid sample and thereby, comes in contact with the first surface of the filter, it is particularly undesirable for the filtrate, having undergone reduction in the amount of particulate contaminate present, to again contact particulate material which may be present on the first surface of the filter material and, which if easily dislodged, may reenter the filtrate stream as the filtrate exits the device. Accordingly, a depth filter in which particles are trapped within internal pores is desirable for such embodiments as compared to a surface filter in which particulate contaminants are trapped on the surface.

The choice of material to be used in a depth filter may vary with the particular application of the device. However, like the elongated hollow member 12, the filters used in the present invention may be formed from any material which is inert or chemically unreactive toward the liquids employed and substances dissolved in the liquids. Preferred as the depth filtration material is a hydrophobic material. Examples of preferred materials include polyolefins and particularly polypropylene. Glass fibers may also be employed when disposed so as to provide high loft. Particularly preferred is a filter material comprising a web of non-woven polypropylene microfibers available from pall Corporation under the Trademark of HDC.

The depth filter 18 is located at the opening 14 such that no antechamber is included in the device 10. In the space between a second, upper opening 22 and the depth filter 18 and defined by the upper surface of the depth filter 18 and the walls of the hollow member 12, is a reservoir 24 for retaining liquid which has passed through the depth filter 18 as it is drawn from the container holding the liquid sample.

Attached to the hollow member 12 at the opening is a means for effecting a differential pressure between the inside and outside of the hollow member 12, such as an aspirator bulb or the like 26.

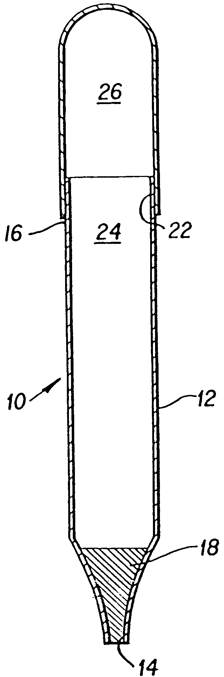

The device illustrated in Figure 1 may be operated by evacuating the hollow member 12, e.g., by squeezing (compressing) the aspirator bulb 26. While maintaining the bulb 26 in a depressed or squeezed form, the end of the hollow member 12 having the opening 14 is placed below the surface of a liquid sample and the bulb 26 released slowly in order to create a partial vacuum in the device 10 and draw liquid in through the opening 14. As the liquid fills the hollow member 12, it passes through the depth filter 18 where particulate matter is trapped. The liquid then passes into and begins to fill reservoir 24. While a partial vacuum still remains within the device 10, that, is, before the aspirator bulb 26 is completely filled or inflated, the device is removed from the liquid sample in order to draw in a small amount of air through opening 14, thereby purging the lower tip of the hollow member 12 and the depth filter 18 of liquid.

The filtrate in the reservoir 24 has a substantially reduced amount of particulate contaminants, which contaminants are trapped within the interstices of the depth filter 18. To transfer purified filtrate from the device 10 to a receiver, the bulb 26 is again compressed to discharge liquid from the hollow member 12 and evacuate the device. Use of a porous or microporous hydrophobic material as the depth filter is preferred because of the affinity of hydrophobic materials for biological substances which, in addition to the mechanical interaction of the particulate contaminants with the walls of the filter pores, assists in retention of the particulate contaminants. However, hydrophilic materials may be used in this embodiment if tests show stronger attraction for specific substances.

Bi-directional flow of liquid takes place, that is, liquid, particulate-containing sample is drawn into the device in a first sampling and filtration step, and liquid is discharged in a second and opposite direction through the same opening 14 in a second step. In the preferred embodiment of device 10, particulate contaminants which are removed from the sample in the first step are substantially completely retained by the depth filter 18 and prevented from returning to the purified filtrate as it passes through the filter in the second direction.

While the invention has been described with regard to a specific embodiment, it should be understood that various changes and modifications can be made in the details of the procedure, without departing from the scope and spirit of the invention; therefore, it is not intended to be limited except as indicated in the appended claims. For example, rather than using an aspirator bulb to create a pressure differential between the interior of the elongate member and the outside, a flexible, hollow elongate member can be used which, upon compression (or subsequent expansion to its original shape), creates a pressure differential. Similarly, while the hollow member is described as elongated, the relative length to width is primarily simply determined by the ease of handling.

The embodiment hereinbefore described permits facile sampling, reduces transfer problems, and reduces the potential for contamination of the sample while removing a substantial amount of particulate contaminant from the liquid, retaining the trapped particulate material in the device, and providing filtered liquid with reduced particulate concentrations. The devices perform the sampling of liquid specimen, separation of particulate contaminant from the liquid component and transfer of the substantially particulate-free liquid using a single piece of equipment, which is disposable, in essentially a single, continuous operation.

**Claims**

1. A device for reducing the amount of particulate contaminant in a liquid of the kind comprising a hollow elongate member (12) having an opening (14) at one end thereof; depth filter (38) means fixedly positioned in said elongate member at the opening, said depth filter means in combination with said elongate member defining a reservoir (24) between said depth filter means (38) and an end of said elongate member opposite said one end; and means (26) at said end of said elongate member opposite said one end for generating a pressure differential between the interior of said elongate member (12) and the exterior thereof whereby a liquid previously containing particulate contaminant may be introduced into the reservoir in said elongate member exclusively through said opening (14) and said depth filter means (38), particulate contaminant being trapped within said depth filter means and a liquid with a reduced particulate contaminant may be removed from said elongate member exclusively through said depth filter means and said opening, characterized in that said elongate member is formed in one-piece, said depth filter means being so positioned at said opening that no antechamber is provided between said opening (14) and said depth filter means (38).

2. The device according to claim 1 characterized in that said elongate member has a second opening at said end opposite said one end, said means for generating a pressure differential being associated with said second opening.

3. The device of claim 1 characterized in that the means for generating a pressure differential are formed integrally with the elongate member.